# EUROPÄISCHE PATENTSCHRIFT

(11) **EP 3 031 676 B1**
(45) Veröffentlichungstag und Bekanntmachung des Hinweises auf die Patenterteilung: **15.05.2019**
(21) Anmeldenummer: 15198607.2
(22) Anmeldetag: 09.12.2015
(51) Int. Cl.: B60R 25/20, B60L 11/18

(54) **VORRICHTUNG FÜR EIN SICHERHEITSSYSTEM EINES FAHRZEUGES**
DEVICE FOR A SAFETY SYSTEM OF A VEHICLE
DISPOSITIF POUR UN SYSTEME DE SECURITE D'UN VEHICULE

(30) Priorität: 10.12.2014 DE 102014118343
(43) Veröffentlichungstag der Anmeldung: 15.06.2016
(73) Patentinhaber: Huf Hülsbeck & Fürst GmbH & Co. KG, 42551 Velbert (DE)
(72) Erfinder: Müller, Ulrich, 42549 Velbert (DE)
(74) Vertreter: Bals, Rüdiger

(56) Entgegenhaltungen:
- WO-A1-2012/082858
- WO-A1-2014/141661
- WO-A2-99/59284
- WO-A2-2007/082258
- DE-A1-102013 016 887
- US-B1- 6 801 134

## Beschreibung

Die Erfindung betrifft ein Verfahren gemäß dem Anspruch 1 sowie ein Fahrzeug gemäß dem Anspruch 5.

Es ist aus dem Stand der Technik bekannt, dass mobile Identifikationsgeber zur Kommunikation mit einem Fahrzeug, insbesondere einem Kraftfahrzeug, genutzt werden, um so z. B. eine schlüssellose Aktivierung einer Schließvorrichtung des Fahrzeuges (z. B. zum Öffnen der Türen) zu bewirken. Dabei dient der mobile Identifikationsgeber (ID-Geber) zur Authentifizierung bei dem Fahrzeug, wobei nur bei einer positiven Authentifizierung z. B. eine Freigabe der Schließvorrichtung des Fahrzeugs bewirkt wird. Hierzu werden im Rahmen des Authentifizierungsvorganges bspw. Authentifizierungsdaten (z. B. mit einem Sicherheitscode) von dem ID-Geber über eine Funkverbindung an ein Sicherheitssystem des Fahrzeugs übermittelt. Auch finden immer häufiger elektronische Sicherheitssysteme für Schließvorrichtungen von Fahrzeugen, welche z. B. eine "Passive-Keyless-Entry"- oder "Keyless-Go"-Funktionalität aufweisen, eine Marktverbreitung. Im Gegensatz zu konventionellen Sicherheitssystemen ist bei solchen passiven Zugangssystemen keine aktive Bedienung des mobilen ID-Gebers (wie z. B. die Betätigung einer Taste des ID-Gebers) durch einen Bediener zur Ver- und Entriegelung notwendig. Um auch ohne aktive Bedienung eine Authentifizierungsabfrage einzuleiten, wird bspw. von dem Fahrzeug bzw. von dem Sicherheitssystem ein Wecksignal über eine Funkverbindung an den ID-Geber gesendet. Dieses Wecksignal, welches insbesondere ein Initialisierungssignal ist, wird von dem externen ID-Geber außerhalb des Fahrzeuges erfasst, woraufhin dieser dann über eine (weitere) Funk- bzw. Kommunikationsverbindung eine Identifikationsprüfung mit dem Fahrzeug durchführt. Zur Kommunikation zwischen dem Fahrzeug und dem ID-Geber und insbesondere zur Übertragung des Wecksignals kommt dabei z. B. eine LF-Funkverbindung (Niederfrequenzfunkverbindung bzw. Low-Frequency-Funkverbindung) bspw. mit einer Frequenz von im Wesentlichen 125 kHz zum Einsatz.

Dabei hat sich als Nachteil gezeigt, dass die Funktionsfähigkeit und Zuverlässigkeit des Sicherheitssystems und insbesondere der Kommunikation zwischen dem Fahrzeug (bzw. Sicherheitssystem) und dem ID-Geber über eine Funkverbindung durch Einflüsse wie Störfrequenzen stark beeinträchtigt werden kann. Erfolgt bspw. gleichzeitig zur Kommunikation ein induktiver Ladevorgang des Fahrzeuges oder eines in der Nähe befindlichen Fahrzeuges, so kann die Kommunikation des Sicherheitssystems mit dem mobilen ID-Geber aufgrund einer Frequenzüberlagerung mit der Ladefrequenz stark gestört werden, so dass eine zuverlässige schlüssellose Aktivierung der Schließvorrichtung des Fahrzeugs durch den Bediener nicht durchführbar ist. Es kommt dann bspw. zu einer fehlerhaften Übertragung oder die Übertragung des Funksignals über die Funkverbindung wird ggf. vollständig verhindert.

Aus der WO 2012/082858 A1, WO 2014/141661 A1, DE 10 2013 016 887 A1, WO 99/59284 A2, WO 2007/082258 A2 und US 6,801,134 B1 sind gattungsgemäße Verfahren bekannt.

Es ist daher eine Aufgabe der vorliegenden Erfindung, die voranstehend beschriebenen Nachteile zumindest teilweise zu beheben. Insbesondere ist es Aufgabe der vorliegenden Erfindung einen zuverlässigen, komfortablen, sicheren und funktionsfähigen Betrieb des Sicherheitssystems, insbesondere des Zugangssystems und der Kommunikation des Sicherheitssystems mit dem mobilen ID-Geber zu gewährleisten.

Die voranstehende Aufgabe wird gelöst durch ein Verfahren mit den Merkmalen des Anspruchs 1 und ein Fahrzeug mit den Merkmalen des Anspruchs 5.

Weitere Merkmale und Details der Erfindung ergeben sich aus den jeweiligen Unteransprüchen, der Beschreibung und den Zeichnungen.

Die Vorrichtung dient zum Einsatz für ein Sicherheitssystem eines Fahrzeuges. Der Begriff "Fahrzeug" bezieht sich dabei im Folgenden selbstverständlich auch auf Kraftfahrzeuge, Elektrofahrzeuge, Motorräder und/oder Elektrokraftfahrzeuge. Dabei ist das Sicherheitssystem insbesondere als ein passives Zugangssystem des Fahrzeuges ausgebildet und dient insbesondere zur schlüssellosen Aktivierung einer Schließvorrichtung des Fahrzeugs. Als ein passives Zugangssystem ist das Sicherheitssystem insbesondere geeignet, bei einer Annäherung eines autorisierten Bedieners (welcher einen mobilen Identifikationsgeber bei sich führt) automatisch - d. h. ohne aktive manuelle Bedienung des Identifikationsgebers durch den Bediener - eine Authentifizierungsabfrage durchzuführen.

Die Vorrichtung weist eine Kommunikationsvorrichtung zur Kommunikation mit dem mobilen Identifikationsgeber (ID-Geber) durch ein Funksignal mit einer Funkfrequenz, insbesondere einer ersten Funkfrequenz, auf. Dabei ist ein induktiver Ladevorgang im Bereich des Fahrzeuges mit einer Ladefrequenz, insbesondere zum elektrischen Aufladen eines Energiespeichers, durchführbar. Insbesondere ist der Energiespeicher ein interner Energiespeicher des Fahrzeuges und/oder ein externer Energiespeicher und/oder ein externer Energiespeicher eines weiteren z. B. in der Nähe befindlichen Fahrzeuges, welcher durch den induktiven Ladevorgang mit der Ladefrequenz aufladbar ist. Sowohl der fahrzeuginterne als auch der externe Energiespeicher sind nicht Bestandteil der Vorrichtung.

Erfindungsgemäß unterscheidet sich die erste Funkfrequenz von der Ladefrequenz derart, dass eine Störung der Kommunikation mit dem mobilen Identifikationsgeber vermeidbar ist. Hierdurch wird der Vorteil erzielt, dass die Funktionsfähigkeit des Sicherheitssystems, insbesondere des Zugangssystems, gewährleistet ist. Insbesondere eine schlüssellose Aktivierung der Schließvorrichtung des Fahrzeuges kann somit stets zuverlässig durch den Bediener (also einer Person mit dem ID-Geber) erfolgen, wodurch die Sicherheit und der Komfort deutlich erhöht werden. Da der mobile ID-Geber insbesondere zur kontaktlosen Authentifizierung bei dem Sicherheitssystem eingesetzt wird, kann durch die Vorrichtung eine sichere und zuverlässige Authentifizierung an dem Fahrzeug ermöglicht werden. Dabei kann der mobile Identifikationsgeber bspw. als mobiles, tragbares Kommunikationsgerät wie ein Mobilfunkgerät, ein Handy, ein Smartphone und/oder ein Laptop ausgebildet sein. Der erwähnte Ladevorgang erfolgt durch eine induktive Energieübertragung zur Aufladung des Energiespeichers, insbesondere eines Akkumulators des Fahrzeugs und/oder eines weiteren Fahrzeugs, durch eine (fahrzeugseitige oder externe) Ladevorrichtung. Der Energiespeicher dient dabei vorzugsweise zum Betrieb eines Elektroantriebs, z. B. eines Elektromotors des Fahrzeugs. Bspw. wird durch den Elektroantrieb (ausschließlich oder in Verbindung mit einem Verbrennungsmotor) der Antrieb bzw. die Fortbewegung des Fahrzeuges ermöglicht. Der Ausdruck Elektrofahrzeug kann sich somit zudem ebenfalls auf ein sogenanntes Hybridfahrzeug beziehen, welches sowohl einen Elektroantrieb als auch einen konventionellen Antrieb aufweist.

Es ist ferner denkbar, dass zur Durchführung des induktiven Ladevorgangs die Ladevorrichtung z. B. Ladeeinheiten (wie Induktionsspulen) aufweist, wobei bei dem Betrieb der Ladevorrichtung elektromagnetische Felder (z. B. magnetische Felder bzw. elektromagnetische Wellen) erzeugt und abgestrahlt werden. Dadurch können Störsignale (z. B. elektromagnetische Wellen) mit der Ladefrequenz auftreten. Diese Störsignale können eine Frequenzüberlagerung mit dem Funksignal bewirken, wenn die Funkfrequenz in einem Ladefrequenzbereich liegt. Der Ladefrequenzbereich ist dabei durch den Ladevorgang (z. B. durch Resonanzfrequenzen der Ladevorrichtung) bestimmt und umfasst zumindest eine Ladefrequenz. Durch die Frequenzüberlagerung wird insbesondere die Kommunikation über die Funkfrequenzen in dem Ladefrequenzbereich vollständig oder zumindest teilweise gestört. Zur Vermeidung der Frequenzüberlagerung mit der ersten Funkfrequenz des Funksignals der Kommunikationsvorrichtung unterscheidet sich die erste Funkfrequenz daher deutlich (z. B. größer als 25% bevorzugt größer als 50 %) von der Ladefrequenz. Alternativ oder zusätzlich kann es vorgesehen sein, dass zur Vermeidung der Störung ein breitbandiges Kommunikationsverfahren (Ultrawideband-Verfahren / UWB_Verfahren) eingesetzt wird. Hierzu kann sich die Funkfrequenz, insbesondere die erste Funkfrequenz, von der Ladefrequenz dadurch unterscheiden, dass sie zur Kommunikation mit dem breitbandigen Kommunikationsverfahren genutzt wird. Somit kann zuverlässig eine Kommunikation mit dem ID-Geber durch das Funksignal erfolgen. Das Funksignal kann dabei z. B. Daten und insbesondere Initialisierungs- und/oder Authentifizierungsdaten aufweisen, welche über eine Funkverbindung mit der Funkfrequenz an den ID-Geber übertragen werden.

Es ist vorgesehen, dass die Kommunikationsvorrichtung eine erste Kommunikationseinheit zur Aussendung des Funksignals mit einer ersten Funkfrequenz, insbesondere deutlich außerhalb eines Ladefrequenzbereichs und eine zweite Kommunikationseinheit zur Aussendung des Funksignals mit einer zweiten Funkfrequenz, insbesondere innerhalb des Ladefrequenzbereichs aufweist. Dabei unterscheidet sich die erste Funkfrequenz von der Ladefrequenz derart, dass eine Störung der Kommunikation mit dem mobilen Identifikationsgeber (durch Störsignale) vermeidbar ist. Es wird somit während eines (aktivierten) Ladevorgangs, eine erste Kommunikationseinheit zur Kommunikation mit dem mobilen Identifikationsgeber genutzt, um eine Frequenzüberlagerung mit der Ladefrequenz zu vermeiden und eine zuverlässige Kommunikation zu gewährleisten. Gleichzeitig ist es bei einem deaktivierten Ladevorgang möglich, eine zweite Kommunikationseinheit zur Kommunikation mit dem mobilen Identifikationsgeber zu nutzen. Dadurch wird der Vorteil erzielt, dass auch der Ladefrequenzbereich zur Kommunikation mit dem mobilen Identifikationsgeber genutzt werden kann, wenn der Ladevorgang deaktiviert ist. Der Ladefrequenzbereich liegt dabei insbesondere im Wesentlichen zwischen 90 kHz bis 130 kHz. Dieser Frequenzbereich besitzt ggf. zur Kommunikation mit dem mobilen Identifikationsgeber durch das Funksignal, z. B. zur Aussendung eines Wecksignals, weitere Vorteile. So kann z. B. das Wecksignal, welches im LF-Frequenzbereich ausgesendet wird, auch zur Ortung des ID-Gebers und/oder Differenzierung dienen, ob sich der ID-Geber innerhalb des Fahrzeugs oder außerhalb des Fahrzeugs befindet. Dies ist damit zu begründen, dass insbesondere durch die Fahrzeugkarosserie eine Abschirmung des LF-Funksignals stattfinden kann. Die Ortung kann z. B. durch eine Auswertevorrichtung (wie einen Mikrocontroller) bzw. Elektronik des Sicherheitssystems oder des Fahrzeuges genutzt werden, um z. B. das Verschließen des Fahrzeuges zu verhindern, wenn sich der ID-Geber innerhalb des Fahrzeuges befindet. Ebenso kann das Starten des Motors zur Erhöhung der Sicherheit verhindert werden, wenn sich der ID-Geber z. B. außerhalb des Fahrzeuges befindet. Die zweite Funkfrequenz zur Aussendung des Funksignals, und insbesondere des Wecksignals, kann dazu bevorzugt im Bereich von 125 kHz liegen.

Es ist optional vorgesehen, dass die erste Funkfrequenz sich von der Ladefrequenz dadurch unterscheiden, dass sie zur Kommunikation mit einem breitbandigen Kommunikationsverfahren, z. B. UWB (Ultrabreitband bzw. Ultra-Breitband-Technologie), genutzt wird. Entsprechend ist es denkbar, dass sich die Funkfrequenz nicht (nur) in ihrer Frequenz von der Ladefrequenz unterscheidet, sondern (auch) z. B. in ihrer (störungssicheren) Nutzung. So ist es insbesondere möglich, dass die Kommunikationsvorrichtung eine erste und/oder weitere Kommunikationseinheit (z. B. als UWB Sender und/oder Empfänger) zur Aussendung des Funksignals mit einer oder mehreren ersten Funkfrequenzen, insbesondere zumindest teilweise deutlich außerhalb eines Ladefrequenzbereichs und/oder in einem UWB-Frequenzbereich, aufweist. Hierzu weist die erste oder weitere Kommunikationseinheit z. B. eine Kommunikationsschnittstelle für das breitbandige Kommunikationsverfahren, insbesondere eine UWB-Kommunikationsschnittstelle, auf, welche z. B. zur Kommunikation mittels UWB geeignet ist. Das Funksignal ist in diesem Fall z. B. ein UWB-Signal. Weiter weist die Kommunikationsvorrichtung eine zweite Kommunikationseinheit zur Aussendung des Funksignals mit mindestens einer zweiten Funkfrequenz, insbesondere innerhalb des Ladefrequenzbereichs auf. Dabei unterscheidet sich zumindest eine oder sämtliche der ersten Funkfrequenzen von der Ladefrequenz derart, dass eine Störung der Kommunikation mit dem mobilen Identifikationsgeber (durch Störsignale) vermeidbar ist.

Bevorzugt weist der mobile Identifikationsgeber (ID-Geber) zumindest eine Sende- und/oder Empfangsvorrichtung (z. B. als UWB Empfänger und/oder Sender) auf, welche zur Kommunikation mit der Kommunikationsvorrichtung (und/oder der ersten oder weiteren Kommunikationseinheit) durch das Funksignal mit der ersten oder den ersten Funkfrequenz(en) geeignet ist. Die Aussendung des Funksignals (insbesondere über die erste oder die weitere Kommunikationseinheit) kann vorzugsweise zumindest teilweise (z. B. in Abhängigkeit von dem Ladevorgang) als UWB-Kommunikation erfolgen, insbesondere um eine Störung der Kommunikation durch den Ladevorgang zu vermeiden. So kann bspw. dann das Funksignal über die UWB-Kommunikation gesendet werden, wenn der Ladevorgang aktiviert ist. Somit ist die Kommunikation zuverlässig möglich.

Es kann optional vorgesehen sein, dass sich die (erste oder ersten) Funkfrequenz(en) von der Ladefrequenz dadurch unterscheidet (unterscheiden), dass zumindest eine erste Funkfrequenz zur Kommunikation mit dem mobilen Identifikationsgeber in einem UWB-Frequenzbereich liegt. Dabei kann es möglich sein, dass das Funksignal, insbesondere über die Kommunikationsvorrichtung und/oder die erste Kommunikationseinheit oder eine weitere Kommunikationseinheit, zumindest teilweise mit der (ersten) Funkfrequenz, ggf. auch mit unterschiedlichen (ersten) Funkfrequenzen, in einem UWB-Frequenzbereich als UWB-Kommunikation ausgesendet wird. Hierdurch kann eine Störung der Kommunikation vermieden werden.

Die (UWB-)Kommunikation mittels der Ultra-Breitband-Technologie (UWB, engl. ultrawideband) basiert dabei auf der Überlegung, dass sich die Kanalkapazität linear mit der Bandbreite des Sendesignals und logarithmisch mit dessen Leistung erhöht. Bspw. ist bei Kommunikationstechnologien wie Bluetooth die verfügbare Bandbreite schmal und konstant. UWB nutzt dagegen einen sehr breiten Frequenzbereich um bei reduzierter Sendeleistung eine hohe Kanalkapazität zu ermöglichen. Dies hat den Vorteil, dass eine Datenübertragung bei sehr geringer Leistungsaufnahme durch den Sender erfolgen kann. Die maximale Ausgangsleistung eines UWB-Senders beträgt dabei z. B. 1 mW.

Zur Datenübertragung kommt insbesondere ein Multiplexverfahren, vorzugsweise ein Frequenzmultiplexverfahren wie einem Orthogonal Frequency Division Multiplexing (OFDM) Verfahren und/oder einem Codemultiplexverfahren wie einem Code Division Multiple Access Verfahren, insbesondere Direct-Sequence-Code Division Multiple Access (DS-CDMA), zum Einsatz. Bevorzugt werden zur Datenübertragung drahtlos impulsförmige Signale übertragen. Dabei erfolgt z. B. auch eine Verschiebung der Pulse mittels (pseudo)zufälligen Werten, wobei dann bspw. UWB Sender und Empfänger die gleichen Werte zur Verschiebung berücksichtigen. Vorzugsweise erfolgt vor oder bei Beginn der Datenübertragung eine zeitliche Synchronisation von Sender und Empfänger. Zur Auswertung des empfangenen Signals umfasst der (UWB) Sender und/oder der Empfänger z. B. Elektronikkomponenten wie Komparatoren zum Vergleich empfangener Impulse oder integrierte Schaltkreise, vorzugsweise auch Elektronikkomponenten zur Durchführung einer Fast Fourier Transformation.

Die Datenübertragung (insbesondere mittels UWB) erfolgt vorzugsweise verschlüsselt. Hierzu kommen bevorzugt kryptographische Sicherheitsmechanismen wie RSA zum Einsatz, welche z. B. Verbindungsschlüssel und/oder Authentifizierungsmechanismen und/oder die Nutzung geheimer (privater) und öffentlicher Schlüssel und/oder ein symmetrisches und/oder asymmetrisches Kryptosystem und/oder eine hybride Verschlüsselung umfassen. Es wird somit der Vorteil erzielt, dass eine sichere und zuverlässige Übertragung möglich ist.

Die UWB-Kommunikation erfolgt dabei vorzugsweise über mindestens einen großen (UWB-) Frequenzbereich, bevorzugt mit einer (insgesamten) Bandbreite von mindestens 5 GHz und/oder mindestens 2 GHz und/oder mindestens 1 GHz und/oder mindestens 500 MHz und/oder von mindestens 40 % und/oder mindestens 30 % und/oder mindestens 20 % und/oder mindestens 10 % des arithmetischen Mittelwertes von unterer und oberer Grenzfrequenz des genutzten Frequenzbandes. Bspw. kann der Frequenzbereich im Bereich von 0 bis 40 GHz, vorzugsweise 3,5 GHz bis 6,8 GHz, bevorzugt 20 MHz bis 11 GHz, besonders bevorzugt 30 MHz bis 10,6 GHz und/oder 22,0 GHz bis 26,7 GHz und/oder 1 MHz bis 12,4 GHz genutzt werden. Weiter kann es vorgesehen sein, dass für die UWB-Kommunikation der maximale Mittelwert der spektralen Leistungsdichte im Bereich zwischen -90,0 dBm/MHz und -85,0 dBm/MHz liegt. Die Sendeleistung beträgt z. B. maximal 1 mW. Die Datenübertragungsrate beträgt vorzugsweise mindestens 1 Mbit/s oder mindestens 4 Mbit/s oder mindestens 6 Mbit/s, insbesondere maximal 6,8 Mbit/s oder 10 Mbit/s. Somit ist eine schnelle und störungssichere Übertragung möglich.

Ferner ist es denkbar, dass das Funksignal, das Antwortsignal des ID-Gebers, die Daten bzw. Authentifizierungsdaten des Funksignals und/oder des Antwortsignals verschlüsselt übertragen werden. Um weiter die Sicherheit zu erhöhen, können die Daten auch ggf. Prüfdaten wie Paritätsbits, fehlererkennende und/oder korrigierende Datencodes aufweisen, um Übertragungsfehler zu erkennen und ggf. zu korrigieren. Auch ist es möglich, dass eine Überwachungsvorrichtung der Vorrichtung, des ID-Gebers und/oder des Sicherheitssystems vorgesehen ist, welche die empfangenen Daten auswertet und Übertragungsfehler detektiert. Dabei ist es ggf. möglich, dass bei erkannten Fehlern bei der Übertragung über die Funkverbindung bzw. des Funksignals von dem Betrieb einer zweiten Kommunikationseinheit auf den Betrieb einer ersten Kommunikationseinheit umgestellt wird und ggf. umgekehrt.

Erfindungsgemäß ist es vorgesehen, dass durch die Kommunikationsvorrichtung in Abhängigkeit des Ladevorgangs eine erste oder weitere Kommunikationseinheit oder eine zweite Kommunikationseinheit zur Aussendung des Funksignals ansteuerbar ist. So ist es vorgesehen, dass bei einem aktivierten Ladevorgang, d. h. bei einem Betrieb der Ladevorrichtung, die erste Kommunikationseinheit angesteuert wird und somit das Funksignal mit einer ersten Funkfrequenz übertragen wird. Somit wird eine Störung der Funkfrequenz durch die Ladefrequenz effektiv vermieden. Bei einem deaktivierten Ladevorgang kann die zweite Kommunikationseinheit zur Aussendung des Funksignals mit einer zweiten Funkfrequenz angesteuert werden. In diesem Fall kann der Ladefrequenzbereich wieder zur Kommunikation mit dem ID-Geber genutzt werden und so die Flexibilität und Zuverlässigkeit für die Kommunikation und Authentifizierung weiter erhöht werden. Die Ansteuerung der ersten und/oder zweiten Kommunikationseinheit erfolgt dabei insbesondere in Abhängigkeit einer Annäherung eines Objektes, insbesondere einer Person mit dem ID-Geber. Diese Annäherung an das Fahrzeug wird bspw. durch eine Sensorvorrichtung mit Näherungssensoren detektiert. Der Umschaltvorgang sowie die Auswertung des Ladevorganges und/oder der Sensorvorrichtung können z. B. durch eine Steuereinheit der Kommunikationsvorrichtung erfolgen. Die Steuereinheit weist dazu bspw. eine Auswertevorrichtung, eine Elektronik und/oder einen Mikroprozessor auf und ist insbesondere elektrisch mit der Fahrzeugelektronik, der Sensorvorrichtung, einer Überwachungsvorrichtung zur Überwachung des Ladevorganges und/oder der Ladevorrichtung verbunden und/oder verbindbar. Somit ist eine effektive und zuverlässige Steuerung der Kommunikationsvorrichtung möglich.

Erfindungsgemäß ist es vorgesehen, dass eine Überwachungsvorrichtung zur Überwachung des Ladevorganges vorgesehen ist, wobei durch die Überwachungsvorrichtung ein aktivierter und/oder deaktivierter Ladevorgang erkennbar ist. Hierzu kann es bspw. vorgesehen sein, dass die Überwachungsvorrichtung elektrisch und/oder mechanisch mit der Ladevorrichtung verbunden und/oder verbindbar ist und z. B. durch die Übertragung eines Signals an eine Auswerteeinheit der Überwachungsvorrichtung der Zustand der Ladevorrichtung (d. h. aktiviert oder deaktiviert) signalisiert wird. Insbesondere ausschließlich bei einem aktivierten Ladevorgang, d. h. bei einer Ladevorrichtung im betriebenen Zustand, erfolgt eine Emission eines Störsignals mit einer Ladefrequenz durch die Ladevorrichtung und/oder eine Frequenzüberlagerung der Ladefrequenz mit der zweiten Funkfrequenz des Funksignals. Nur bei einem deaktivierten Ladevorgang, d. h. bei einer Ladevorrichtung im deaktivierten (und ggf. stromlosen) Zustand kann eine Kommunikation der Kommunikationsvorrichtung mit dem ID-Geber störungsfrei mit einer zweiten Funkfrequenz erfolgen. Somit wird durch die Überwachungsvorrichtung der Vorteil erzielt, dass bei einem aktivierten Ladevorgang die (erste) Funkfrequenz des Funksignals derart angepasst bzw. genutzt werden kann, dass eine Störung der Kommunikation mit dem mobilen Identifikationsgeber vermieden wird und so die Zuverlässigkeit der Kommunikation und des Sicherheitssystems des Fahrzeugs erhöht wird.

Es ist ferner denkbar, dass die Kommunikationsvorrichtung eine erste Kommunikationseinheit mit einer Bluetooth-Kommunikationsschnittstelle und/oder einer HF-Kommunikationsschnittstelle und/oder einer UWB-Kommunikationsschnittstelle und eine zweite Kommunikationseinheit mit einer LF-Kommunikationsschnittstelle aufweist. Die LF-Kommunikationsschnittstelle ist dabei insbesondere dazu geeignet, Funksignale mit einer Funkfrequenz im Bereich von im Wesentlichen 50 kHz bis 300 kHz auszusenden. Die HF-Kommunikationsschnittstelle (HF bezieht sich auf High Frequency oder Kurzwellen) ist insbesondere geeignet, ein Funksignal im Frequenzbereich von 3 bis 30 MHz auszusenden. Die UWB-Kommunikationsschnittstelle ist bevorzugt geeignet, eine UWB-Kommunikation in einem UWB-Frequenzbereich durchzuführen. Dabei kann das Funksignal und/oder ein Antwortsignal des ID-Gebers für die Übertragung im UWB- und/oder LF- und/oder HF-Frequenzbereich z. B. amplitudenmoduliert, codemoduliert, frequenzmoduliert und/oder pulslängenmoduliert ausgesendet werden. Die Bluetooth-Kommunikationsschnittstelle sendet dabei insbesondere Funksignal in einem Frequenzbereich von im Wesentlichen 2,4 GHz aus, wobei bspw. ein Industriestandard IEEE 802.15.1 zur Datenübertragung bzw. zur Übertragung des Funksignals zum Einsatz kommt. Auch kann die Bluetooth-Kommunikationsschnittstelle z. B. gemäß einem Bluetooth-Low Power bzw. Bluetooth-Low Energy Standard ausgebildet sein. Weiter ist es denkbar, dass die erste Kommunikationseinheit eine GSM- (Global System for Mobile Communication) eine WLAN-(Wireless Local Area Network) und/oder eine NFC- (Near Field Communication) Kommunikationsschnittstelle aufweist. Somit ist es möglich, durch die erste Kommunikationsschnittstelle flexibel einen Frequenzbereich für das Funksignal zu nutzen, welcher sich deutlich von der Ladefrequenz unterscheidet und somit eine zuverlässige Kommunikation gewährleistet. Dabei kann es möglich sein, dass die verschiedenen Kommunikationsschnittstellen der ersten Kommunikationseinheit und/oder die erste Kommunikationseinheit mit der zweiten Kommunikationseinheit gleichzeitig oder sequenziell betrieben werden. Bspw. kann bei einer Annäherung eines Objekts, wie dem ID-Geber oder des Bedieners, gleichzeitig oder sequenziell die erste und zweite Kommunikationseinheit angesteuert werden und somit das Funksignal gleichzeitig oder sequenziell bzw. durch Polling auf verschiedenen Frequenzen an den ID-Geber übertragen werden. Es wird hierdurch der Vorteil erzielt, dass auch ohne eine Überwachung des Ladevorgangs Störungen in bestimmten Frequenzbereichen umgangen werden können.

Gemäß einer vorteilhaften Weiterbildung kann es vorgesehen sein, dass sich die erste Funkfrequenz deutlich von der Ladefrequenz unterscheidet und insbesondere wenigstens eine 10-fach, 100-fach und/oder 1000-fach höhere Frequenz aufweist als die Ladefrequenz. Es kann zudem vorgesehen sein, dass ein Frequenzabstand von wenigstens z. B. 100 kHz, 1 MHz, 10 MHz, 100 MHz oder 1 GHz zwischen der ersten Funkfrequenz bzw. der Funkfrequenz und der Ladefrequenz vorgesehen ist. Zudem ist es denkbar, dass der Abstand adaptiv durch eine Steuereinheit z. B. in Abhängigkeit zu überwachten Störsignalen geregelt wird. Durch den deutlichen Abstand zur Ladefrequenz wird stets eine zuverlässige Kommunikation gewährleistet.

Vorteilhafterweise kann im Rahmen der Erfindung vorgesehen sein, dass die Funkfrequenz, insbesondere eine erste Funkfrequenz, im Frequenzbereich von 200 kHz bis 10 GHz, insbesondere im Frequenzbereich von 3 MHz bis 3 GHz liegt und/oder die Ladefrequenz im Ladefrequenzbereich von 1 kHz bis 500 kHz, insbesondere 50 kHz bis 200 kHz liegt. Ebenfalls ist es denkbar, dass die Kommunikationsvorrichtung stets zur Kommunikation mit dem mobilen Identifikationsgeber ein Funksignal mit einer Funkfrequenz nutzt, wobei die Funkfrequenz im Frequenzbereich von 200 kHz bis 10 GHz, insbesondere im Frequenzbereich von 3 MHz bis 3 GHz liegt. Dabei kann die Kommunikationsvorrichtung z. B. ausschließlich eine erste Kommunikationseinheit (d. h. ohne weitere Kommunikationseinheiten) zur Kommunikation im beschriebenen Frequenzbereich aufweisen. Somit wird stets eine Übertragung des Funksignals störungsfrei durch die Ladefrequenz ermöglicht.

Es ist ferner denkbar, dass eine, insbesondere optische oder kapazitive, Sensorvorrichtung zur Erkennung einer Annäherung eines Objekts, insbesondere eines Bedieners des mobilen Identifikationsgebers, vorgesehen ist, wobei insbesondere (z. B. ausschließlich) bei einer positiven Erkennung der Annäherung und eines aktivierten Ladevorgangs durch die Kommunikationsvorrichtung die erste Kommunikationseinheit ansteuerbar ist. Dabei wird bei einem aktivierten Ladevorgang und bei Erkennung der Annäherung die erste Kommunikationseinheit zur Aussendung des Funksignals angesteuert und bei deaktiviertem Ladevorgang und Erkennung der Annäherung insbesondere ausschließlich die zweite Kommunikationseinheit angesteuert. Die Sensorvorrichtung kann dabei bspw. einen kapazitiven Sensor, z. B. im Bereich des Türgriffs und/oder einen optischen Sensor, z. B. im Seitenbereich und/oder im Heckbereich des Fahrzeugs aufweisen. Ebenfalls ist es denkbar, dass die Sensorvorrichtung zumindest zwei, drei, vier und/oder fünf Sensoren, z. B. an unterschiedlichen Seiten (Vorderseite, Heckseite, Seitenbereich) des Fahrzeuges aufweist, um eine zuverlässige Erkennung einer Annäherung des Objekts von zumindest einer Richtung des Fahrzeuges zu ermöglichen. Ebenfalls kann es vorgesehen sein, dass die Sensorvorrichtung und/oder eine Steuereinheit z. B. elektronisch mit der Kommunikationsvorrichtung verbunden ist, um z. B. durch eine Auswertung einer Funkverbindung zur Übertragung des Funksignals die Annäherung des ID-Gebers zu erfassen. Dabei kann bspw. die Signalstärke ausgewertet werden, um z. B. einen Abstand zum ID-Geber zu messen und/oder durch Polling ein Vorhandensein des ID-Gebers im Empfangsbereich zu detektieren. So kann bspw. zyklisch das Funksignal ausgesendet werden, wobei bei einem Empfang durch den ID-Geber automatisch ein Antwortsignal an das Fahrzeug übermittelt wird und so eine Annäherung detektiert wird. Auf diese Weise wird eine zuverlässige Erkennung einer Annäherung ermöglicht, um dann z. B. in Abhängigkeit der Annäherung und des Ladevorganges eine erste Kommunikationseinheit oder eine zweite Kommunikationseinheit der Kommunikationsvorrichtung anzusteuern.

Ebenfalls ist ein mobiler Identifikationsgeber zur Verbindung, insbesondere zur Kommunikationsverbindung, mit einer Vorrichtung für ein Sicherheitssystem eines Fahrzeuges, insbesondere eines Elektrofahrzeugs, Kraftfahrzeuges, Motorrads und/oder Elektrofahrzeuges angegeben Dabei kann das Sicherheitssystem bspw. ein passives Zugangssystem zur schlüssellosen Aktivierung einer Schließvorrichtung des Fahrzeugs sein. Die Vorrichtung weist dabei eine Kommunikationsvorrichtung zur Kommunikation mit dem mobilen Identifikationsgeber durch ein Funksignal mit einer ersten Funkfrequenz auf, wobei ein induktiver Ladevorgang im Bereich des Fahrzeuges mit einer Ladefrequenz, insbesondere zum elektrischen Aufladen eines Energiespeichers, durchführbar ist. Bevorzugt weist der mobile Identifikationsgeber (ID-Geber) eine Sende- und/oder Empfangsvorrichtung auf, welche zur Kommunikation mit der Kommunikationsvorrichtung durch das Funksignal mit der ersten Funkfrequenz geeignet ist. Hierbei ist vorgesehen, dass die erste Funkfrequenz sich von der Ladefrequenz derart unterscheidet, dass eine Störung der Kommunikation mit dem mobilen Identifikationsgeber vermeidbar ist. Damit weist der mobile Identifikationsgeber die gleichen Vorteile auf, wie sie ausführlich mit Bezug auf eine Vorrichtung erläutert worden sind. Zudem kann der mobile Identifikationsgeber geeignet sein, mit einer Vorrichtung betrieben zu werden.

Es ist weiter denkbar, dass der mobile ID-Geber geeignet ist, Funksignale der Vorrichtung zu empfangen. Dazu kann der mobile ID-Geber bevorzugt eine Sende- und/oder Empfangsvorrichtung aufweisen, welche bspw. eine erste Sende- und/oder Empfangseinheit und/oder eine zweite Sende- und/oder Empfangseinheit aufweist. Die erste Sende- und/oder Empfangseinheit kann dabei zur Kommunikation mit einer ersten Kommunikationseinheit der Kommunikationsvorrichtung geeignet sein und die zweite Sende- und/oder Empfangseinheit kann entsprechend zur Kommunikation mit einer zweiten Kommunikationseinheit der Kommunikationsvorrichtung geeignet sein. Die Kommunikation mit der ersten oder zweiten Kommunikationseinheit und damit die Ansteuerung der ersten oder zweiten Sende- und/oder Empfangseinheit erfolgt in Abhängigkeit des Ladezustands einer Ladevorrichtung. Dabei kann die Sende- und/oder Empfangsvorrichtung des mobilen ID-Gebers zum Empfang des Funksignals, insbesondere eines Wecksignals und/oder zum Senden eines Antwortsignals an das Fahrzeug geeignet sein. Bevorzugt weist die erste Sende- und/oder Empfangseinheit zumindest eine Bluetooth-Schnittstelle und/oder eine HF-Schnittstelle und/oder eine UWB-Schnittstelle und/oder eine Schnittstelle auf, welche zur Kommunikation mit der ersten Kommunikationseinheit der Kommunikationsvorrichtung der Vorrichtung geeignet ist. Weiter ist es denkbar, dass die zweite Sende- und/oder Empfangseinheit der Sende- und/oder Empfangsvorrichtung des ID-Gebers eine LF-Schnittstelle und/oder eine Schnittstelle aufweist, welche zur Kommunikation mit der zweiten Kommunikationseinheit der Kommunikationsvorrichtung geeignet ist. Zudem kann der mobile ID-Geber eine Überwachungseinheit aufweisen, welche zur Überwachung von Frequenzbereichen und/oder zur Kommunikation mit der Ladevorrichtung geeignet ist und so einen aktivierten und deaktivierten Ladevorgang erkennen kann. Die Überwachungseinheit kann dabei in Abhängigkeit des Ladezustands z. B. bei einem aktivierten Ladevorgang die erste Sende- und/oder Empfangseinheit und bei einem deaktivierten Ladevorgang die zweite Sende- und/oder Empfangseinheit des mobilen ID-Gebers ansteuern. Somit wird stets eine zuverlässige Kommunikation mit der Vorrichtung bzw. mit dem Sicherheitssystem ermöglicht.

Die Erfindung umfasst auch ein Verfahren zum Betreiben einer Vorrichtung für ein Sicherheitssystem eines Fahrzeugs, insbesondere Kraftfahrzeugs, Elektrofahrzeugs, Motorrads und/oder Elektrokraftfahrzeugs. Das Sicherheitssystem ist dabei insbesondere ein passives Zugangssystem und dient insbesondere zur schlüssellosen Aktivierung einer Schließvorrichtung des Fahrzeugs. Dabei weist die Vorrichtung eine Kommunikationsvorrichtung zur Kommunikation mit einem mobilen Identifikationsgeber durch ein Funksignal mit einer ersten Funkfrequenz auf. Zudem wird ein induktiver Ladevorgang im Bereich des Fahrzeuges mit einer Ladefrequenz, insbesondere zum elektrischen Aufladen eines Energiespeichers, durchgeführt. Erfindungsgemäß ist vorgesehen, dass die erste Funkfrequenz sich von der Ladefrequenz derart unterscheidet, dass eine Störung der Kommunikation mit dem mobilen Identifikationsgeber vermieden wird. Damit bringt das erfindungsgemäße Verfahren die gleichen Vorteile mit sich, wie sie ausführlich mit Bezug auf eine Vorrichtung sowie mit Bezug auf einen mobilen Identifikationsgeber erläutert worden sind. Zudem findet für das erfindungsgemäße Verfahren eine Vorrichtung und ein mobiler Identifikationsgeber Verwendung. Vorteilhafterweise kann im Rahmen der Erfindung vorgesehen sein, dass das Funksignal ein Wecksignal zum Empfang durch den mobilen Identifikationsgeber ist, wobei der mobile Identifikationsgeber bei einem Empfang des Wecksignals ein Antwortsignal an die Vorrichtung aussendet. Dabei kann das Wecksignal z. B. mit einer Funkfrequenz im LF-Frequenzbereich, insbesondere im Bereich von 125 kHz von der Kommunikationsvorrichtung ausgesendet werden. Zum Empfang des Wecksignals weist der mobile Identifikationsgeber z. B. eine Sende- und/oder Empfangseinheit auf, welche z. B. zum Empfang im LF-Frequenzbereich geeignet ist. Das Antwortsignal kann dabei z. B. ein Funksignal im HF-Frequenzbereich sein, welches über eine zweite Sende- und/oder Empfangseinheit versendet wird. Ebenfalls ist es denkbar, dass das Wecksignal z. B. über die zweite Sende- und/oder Empfangseinheit des mobilen ID-Gebers empfangen wird. Hierzu kann z. B. eine UWB- und/oder HF- und/oder Bluetooth-Schnittstelle der zweiten Sende- und/oder Empfangseinheit zum Einsatz kommen. Dieses hat den Vorteil, dass eine sehr komfortable und sichere Authentifizierung und Aktivierung der Schließvorrichtung des Fahrzeugs auf unterschiedlichen Frequenzbereichen möglich ist, um z. B. eine Störung durch Störsignale zu vermeiden.

Es ist ferner denkbar, dass während des aktivierten Ladevorgangs eine Ladevorrichtung des Fahrzeuges betrieben wird, wobei insbesondere durch den Stromfluss in einer primären Ladeeinheit, insbesondere Ladespule, eine Spannung in einer sekundären Ladeeinheit, insbesondere Ladespule, der Ladevorrichtung erzeugt wird, insbesondere zur Aufladung eines Energiespeichers, z. B. eines Akkumulators des Fahrzeuges. Die Ladeeinheiten können bspw. ein ferromagnetisches Material wie einen Eisenkern aufweisen und z. B. als Induktionsspule, Flachspule, gewickelte Spule, Zylinderspule, Teslaspule und/oder Transformatorspule ausgebildet sein, um eine möglichst effiziente Energieübertragung zu ermöglichen. Während eines deaktivierten Ladevorgangs ist die Ladevorrichtung deaktiviert und emittiert insbesondere keine Störsignale bzw. elektromagnetischen Wellen im Ladefrequenzbereich. Insbesondere während des aktivierten Ladevorgangs emittiert dabei die Ladevorrichtung ein Störsignal bzw. elektromagnetische Wellen im Bereich der Ladefrequenz bzw. im Ladefrequenzbereich. Die Ladevorrichtung kann dabei z. B. eine fahrzeugseitige sekundäre Ladeeinheit aufweisen, welche in Verbindung mit der primären Ladeeinheit z. B. einen Transformator zur Aufladung des Energiespeichers bzw. Akkumulators des Fahrzeugs bildet. Die Aufladung erfolgt dabei insbesondere kontaktlos durch eine (ausschließliche) induktive Energieübertragung. Die primäre Ladeeinheit kann dabei außerhalb des Fahrzeugs z. B. derart befahrbar angeordnet/ausgebildet sein, dass das Fahrzeug über die primäre Ladeeinheit fahren und so derart positioniert werden kann, dass eine induktive Energieübertragung von der primären Ladeeinheit zur sekundären Ladeeinheit möglich ist. Insbesondere in Abhängigkeit zur Betriebsfrequenz dieses Transformators bzw. der primären und sekundären Ladeeinheiten wird ein elektromagnetisches Feld, d. h. insbesondere ein magnetisches Streufeld, mit der Ladefrequenz ausgestrahlt. Dieses wird zur Energieübertragung genutzt, bewirkt jedoch auch Störsignale. Daher ist eine Überwachungsvorrichtung (der Vorrichtung oder der Ladevorrichtung mit Verbindung zur Vorrichtung) vorgesehen, welche bei einem aktivierten Ladevorgang bewirkt, dass ein Funksignal mit einer ersten Funkfrequenz ausgesendet wird, welche sich deutlich von der Ladefrequenz unterscheidet. Somit wird eine einfache, komfortable und kontaktlose Aufladung des Akkumulators des Fahrzeugs ermöglicht und dennoch der zuverlässige Betrieb des Sicherheitssystems gewährleistet.

Es ist ferner denkbar, dass die nachfolgenden Schritte zur kontaktlosen Authentifizierung bei dem Sicherheitssystem des Fahrzeugs durchgeführt werden:
a) Aussendung des Funksignals, insbesondere mit einer ersten oder zweiten Funkfrequenz, durch die Kommunikationsvorrichtung,
b) Empfang des Funksignals von dem mobilen Identifikationsgeber,
c) Aussendung eines Antwortsignals, insbesondere mit einer ersten Funkfrequenz oder einer zweiten Funkfrequenz oder einer dritten Funkfrequenz, insbesondere mit einem Sicherheitscode, an die Kommunikationsvorrichtung.

Dabei wird die Übertragung des Funksignals bei einem aktivierten Ladezustand mit einer ersten Funkfrequenz und bei einem deaktivierten Ladezustand mit einer zweiten Funkfrequenz erfolgen. Die Übertragung des Funksignals kann dabei z. B. durch einen Sensor, insbesondere optischen Sensor einer Sensorvorrichtung der Vorrichtung ausgelöst werden. Somit wird erst bei Annäherung eines Objektes, z. B. des Bedieners oder des ID-Gebers, das Funksignal ausgesendet. Das Funksignal kann dabei bspw. über eine Funkverbindung übertragen werden, wobei die Funkverbindung insbesondere eine bidirektionale Verbindung ist und insbesondere eine UWB-, LF-, HF- und/oder Bluetooth-Verbindung ist. Die Funkverbindung kann dabei z. B. auch zum Austausch von Authentifizierungsdaten oder sonstigen Fahrzeuginformationen dienen. Das Antwortsignal wird z. B. über eine erste und/oder eine zweite und/oder eine dritte Sende- und/oder Empfangseinheit des mobilen Identifikationsgebers übertragen werden, wobei die dritte Sende- und/oder Empfangseinheit z. B. eine UWB- und/oder HF- und/oder LF- und/oder Bluetooth-Schnittstelle aufweist. Die dritte Funkfrequenz liegt bspw. im HF- und/oder LF- und/oder Bluetooth- und/oder UWB-Frequenzbereich und insbesondere im Frequenzbereich von 30 kHz bis 300 kHz und/oder 3 MHz bis 30 MHz und/oder 2.4 GHz bis 2.485 GHz. Insbesondere kann die dritte Sende- und/oder Empfangseinheit regulär und stets (unabhängig vom Ladevorgang) zur Übertragung des Antwortsignals genutzt werden. Somit ist eine sichere und zuverlässige Authentifizierung am Fahrzeug möglich.

Ebenfalls angegeben ist ein Sicherheitssystem, insbesondere ein aktives oder passives Zugangssystem für ein Fahrzeug, insbesondere für eine schlüssellose Aktivierung einer Schließvorrichtung des Fahrzeugs. Das Sicherheitssystem weist einen mobilen Identifikationsgeber und eine Vorrichtung auf, wobei die Vorrichtung eine Kommunikationsvorrichtung zur Kommunikation mit dem mobilen Identifikationsgeber durch ein Funksignal mit einer ersten Funkfrequenz aufweist. Dabei ist ein induktiver Ladevorgang im Bereich des Fahrzeuges mit einer Ladefrequenz, insbesondere zum elektrischen Aufladen eines Energiespeichers, durchführbar. Hierbei ist vorgesehen, dass die erste Funkfrequenz sich von der Ladefrequenz derart unterscheidet, dass eine Störung der Kommunikation mit dem mobilen Identifikationsgeber vermeidbar ist. Damit bringt das Sicherheitssystem die gleichen Vorteile mit sich, wie sie ausführlich mit Bezug auf eine Vorrichtung, einen mobilen Identifikationsgeber, und ein erfindungsgemäßes Verfahren erläutert worden sind. Zudem kann das Sicherheitssystem geeignet sein, mit einer Vorrichtung, mit einem mobilen Identifikationsgeber und/oder gemäß einem erfindungsgemäßen Verfahren betrieben zu werden.

Zudem ist ein Fahrzeug, insbesondere ein Elektrofahrzeug, ein Kraftfahrzeug, Motorrad und/oder ein Elektrokraftfahrzeug, Gegenstand der Erfindung. Das erfindungsgemäße Fahrzeug weist eine Vorrichtung für ein Sicherheitssystem des Fahrzeugs auf, welches insbesondere für eine schlüssellose Aktivierung einer Schließvorrichtung des Fahrzeugs geeignet ist. Dabei umfasst die Vorrichtung eine Kommunikationsvorrichtung zur Kommunikation mit einem mobilen Identifikationsgeber durch ein Funksignal mit einer ersten Funkfrequenz. Dabei ist ein induktiver Ladevorgang im Bereich des Fahrzeuges mit einer Ladefrequenz, insbesondere zum elektrischen Aufladen eines Energiespeichers, durchführbar, wobei die erste Funkfrequenz sich von der Ladefrequenz derart unterscheidet, dass eine Störung der Kommunikation mit dem mobilen Identifikationsgeber vermeidbar ist. Damit bringt das erfindungsgemäße Fahrzeug die gleichen Vorteile mit sich, wie sie ausführlich mit Bezug auf eine Vorrichtung, ein erfindungsgemäßes Verfahren, einen mobilen Identifikationsgeber und ein Sicherheitssystem erläutert worden sind. Zudem kann das erfindungsgemäße Fahrzeug geeignet sein, gemäß einem erfindungsgemäßen Verfahren betrieben zu werden, wobei insbesondere eine Vorrichtung, ein mobiler Identifikationsgeber und/oder ein Sicherheitssystem Verwendung findet.

Es ist ferner eine Ladevorrichtung zur Durchführung eines induktiven Ladevorganges des Fahrzeuges mit einer Ladefrequenz vorgesehen ist, wobei die Ladevorrichtung insbesondere eine sekundäre Ladeeinheit aufweist, und insbesondere während des Ladevorganges induktiv Energie von einer primären Ladeeinheit übertragbar ist. Die sekundäre Ladeeinheit ist dabei insbesondere innerhalb des erfindungsgemäßen Fahrzeugs integriert und insbesondere in Bodennähe bzw. im Bereich des Unterbodens des Fahrzeugs angeordnet. So kann ein Bediener das Fahrzeug sehr einfach und komfortabel über eine primäre Ladeeinheit anhalten und somit in unmittelbare Nähe zur primären Ladeeinheit bringen. Hierdurch kann auf einfache Weise ein Ladevorgang ermöglicht werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen:
- Figur 1: eine perspektivische schematische Darstellung von Teilen einer Vorrichtung sowie eines erfindungsgemäßen Fahrzeugs,
- Figur 2a: eine schematische Seitenansicht eines erfindungsgemäßen Fahrzeugs,
- Figur 2b: eine Draufsicht des erfindungsgemäßen Fahrzeugs,
- Figur 3a+3b: eine schematische Ansicht von Teilen einer Vorrichtung, wobei ein deaktivierter und aktivierter Ladevorgang dargestellt ist,
- Figur 4a: eine schematische Darstellung einer Kommunikationsvorrichtung einer Vorrichtung,

- Figur 4b: eine schematische Darstellung einer Kommunikationsvorrichtung einer Vorrichtung,

- Figur 5: eine schematische Darstellung eines mobilen Identifikationsgebers,
- Figur 6: eine schematische Darstellung zur Visualisierung von Verfahrensschritten eines Verfahrens.

Technische Merkmale und Elemente mit gleicher Funktion und Wirkungsweise sind in den Figuren jeweils mit demselben Bezugszeichen versehen.

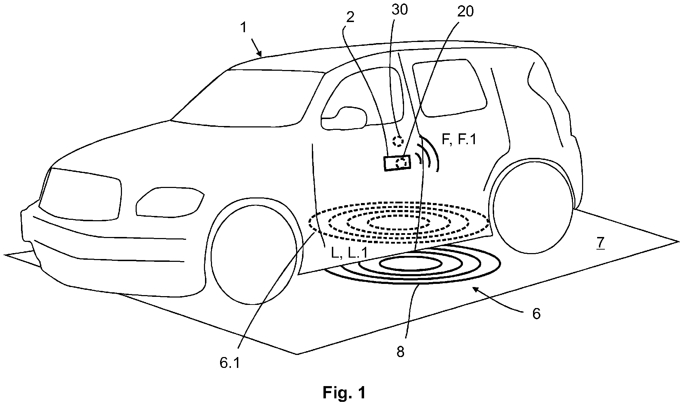

In Figur 1 ist schematisch ein erfindungsgemäßes Fahrzeug 1 mit Teilen einer Vorrichtung 10 gezeigt. Dabei ist zu sehen, dass im (oder am) Fahrzeug 1 eine Kommunikationsvorrichtung 20, bspw. im Türgriff 2 angeordnet ist, welche eine Kommunikation durch eine Funkverbindung mit einem nicht gezeigten mobilen Identifikationsgeber 100 ermöglicht. Die Kommunikationsvorrichtung 20 kann dazu ein Funksignal F mit ersten Funkfrequenz F.1 aussenden. Wird dieses Funksignal F, welches bspw. ein Wecksignal ist, von dem ID-Geber 100 empfangen, dann kann bspw. ein Authentifizierungsvorgang mit dem Fahrzeug 1 dadurch eingeleitet werden, dass der mobile Identifikationsgeber 100 ein Antwortsignal über eine weitere Funkverbindung an das Fahrzeug 1 überträgt. Das Antwortsignal umfasst bspw. Authentifizierungsdaten, wie einen Sicherheitscode, welcher durch ein fahrzeugseitiges Sicherheitssystem ausgewertet werden kann. Stimmt dabei der Sicherheitscode mit einem vorgegebenen Code überein, wird z. B. die Schließvorrichtung des Fahrzeugs 1 nach erfolgreicher Authentifizierung aktiviert. Damit bei einer Annäherung des Benutzers bzw. des ID-Gebers 100 ein Funksignal F zur Authentifizierung übertragen wird, ist vorzugsweise eine Sensorvorrichtung 30 am Fahrzeug 1 vorgesehen, welche die Annäherung von Objekten 4 detektiert und daraufhin die Kommunikationsvorrichtung 20 derart ansteuert, dass das Funksignal F ausgesendet wird. Das Funksignal F wird daraufhin (im Normalfall bspw. über eine LF-Funkverbindung) z. B. durch eine zweite Kommunikationseinheit 22 der Kommunikationsvorrichtung 20 ausgestrahlt. Das Funksignal F kann dabei z. B. durch einen Ladevorgang L gestört werden, wenn im gleichen Frequenzbereich elektromagnetische bzw. magnetische Felder im Bereich des Fahrzeugs 1 vorhanden sind und bspw. eine Frequenzüberlagerung erfolgt. Ein solches Störsignal wird durch eine Ladevorrichtung 6 des Fahrzeugs 1 erzeugt. Die Ladevorrichtung 6 wird dabei zur Energieübertragung und Aufladung eines Energiespeichers des Fahrzeugs 1 verwendet. Dazu weist die Ladevorrichtung 6 eine sekundäre Ladeeinheit 6.1 auf, welche am (oder im) Fahrzeug 1 angeordnet ist. Wie in Figur 1 dargestellt ist, kann die sekundäre Ladeeinheit 6.1 im unteren Bereich des Fahrzeugs 1 angeordnet sein und so in einfacher Weise dadurch in den Bereich einer primären Ladeeinheit 8 gebracht werden. Dazu kann der Bediener des Fahrzeugs 1 z. B. das Fahrzeug 1 unmittelbar über der primären Ladeeinheit 8 abstellen. Die primäre Ladeeinheit 8 kann bspw. in oder an einem befahrbaren Boden 7 angeordnet und/oder integriert sein und somit z. B. auch selbst befahrbar ausgebildet sein. Da die sekundäre Ladeeinheit 6.1 somit in die Nähe der primären Ladeeinheit 8 gelangt und die Ladeeinheiten 6.1, 8 bspw. als Induktionsspulen ausgebildet sind, kann induktiv elektrische Energie von der primären Ladeeinheit 8 auf die sekundäre Ladeeinheit 6.1 übertragen werden. Die elektrische Energie wird daraufhin z. B. von der sekundären Ladeeinheit 6.1 an weitere Komponenten der Ladevorrichtung 6 des Fahrzeugs 1 weitergeleitet, um damit den Energiespeicher des Fahrzeugs 1 aufzuladen. Die Ladeeinheiten 8, 6.1 bzw. Induktionsspulen können bspw. ein ferromagnetisches Material wie einen Eisenkern aufweisen und z. B. als Flachspule, gewickelte Spule, Zylinderspule, Teslaspule und/oder Transformatorspule ausgebildet sein. Dabei können die Ladeeinheiten möglichst flach bzw. parallel zu dem Unterboden des Fahrzeuges 1 angeordnet sein. Da die Ladeeinheiten 6.1, 8 mit einer bestimmten Ladefrequenz L.1 betrieben werden, welche bspw. im Bereich zwischen 90 und 130 kHz liegt, entsteht eine Frequenzüberlagerung mit dem Funksignal F, wenn erste Funkfrequenz F.1 des Funksignals F z. B. im LF-Frequenzbereich liegt. Daher ist erfindungsgemäß vorgesehen, dass die erste Funkfrequenz F.1 sich von der Ladefrequenz L.1 derart unterscheidet, dass eine Störung der Kommunikation mit dem mobilen Identifikationsgeber 100 vermeidbar ist. Dazu kommt bspw. eine erste Kommunikationseinheit 21 der Kommunikationsvorrichtung 20 zum Einsatz, die das Funksignal F mit einer ersten Funkfrequenz F.1 aussendet, die sich deutlich von einem Ladefrequenzbereich L.2 und damit von der Ladefrequenz L.1 unterscheidet. Die Kommunikationsvorrichtung 20 nutzt im Normalfall die zweite Kommunikationseinheit 22 und betreibt ausschließlich bei einem aktivierten Ladevorgang II die erste Kommunikationseinheit 21.

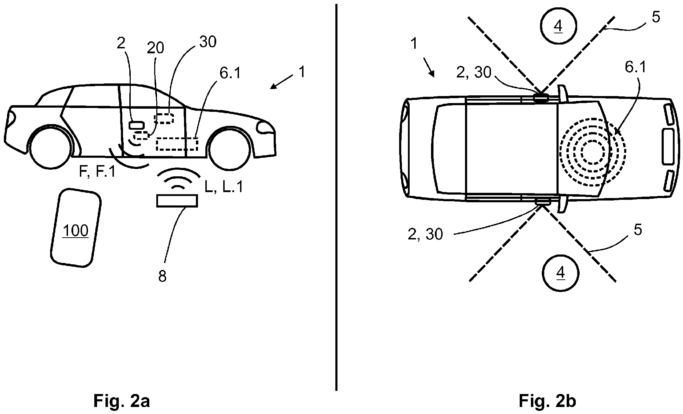

In den Figuren 2a und 2b sind Teile einer Vorrichtung 10 sowie eines erfindungsgemäßen Fahrzeugs 1 und eines Sicherheitssystems gezeigt. Es ist ein mobiler ID-Geber 100 zu sehen, welchen bspw. ein Bediener des Fahrzeugs 1 bei sich trägt. Der Bediener, bzw. der mobile ID-Geber 100, kann durch eine Sensorvorrichtung 30 des Fahrzeugs 1 als Objekt 4 in einem Erkennungsbereich 5 detektiert werden. In den Figuren 2a und 2b ist dabei die Sensorvorrichtung 30 im Seitenbereich des Fahrzeugs 1 angeordnet, bspw. in einem Türgriff 2 (z. B. im Inneren der Kunststoffverkleidung des Türgriffes 2) eines Fahrzeugs 1. Es ist jedoch ebenfalls denkbar, dass die Sensorvorrichtung 30 an beliebigen Bereichen des Fahrzeugs 1, z. B. im Heckbereich, angeordnet ist und damit durch den Erkennungsbereich 5 z. B. vollständig der Außenbereich des Fahrzeugs 1 überwacht wird. In Figur 2a ist ebenfalls eine sekundäre Ladeeinheit 6.1 im Fahrzeug 1 sowie eine externe primäre Ladeeinheit 8 außerhalb des Fahrzeugs 1, z. B. in einem Boden 7, dargestellt. Es ist zudem eine Kommunikationsvorrichtung 20 im Fahrzeug 1 erkennbar, welche in Funkverbindung mit dem ID-Geber 100 steht.

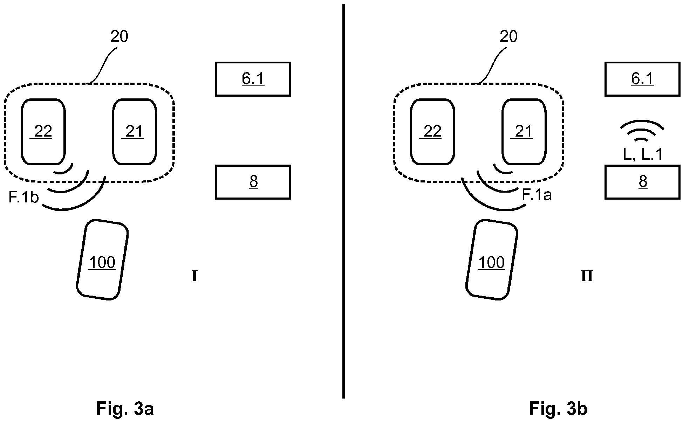

In den Figuren 3a und 3b ist eine weitere Vorrichtung 10 und ein Sicherheitssystem gezeigt, wobei eine Kommunikationsvorrichtung 20 eine erste Kommunikationseinheit 21 und eine zweite Kommunikationseinheit 22 umfasst. In Figur 3a ist dabei ein deaktivierter Ladevorgang I gezeigt, wobei eine primäre Ladeeinheit 8 nicht betrieben wird und damit keine elektrische Energie induktiv an eine sekundäre Ladeeinheit 6.1 überträgt. Bei dem deaktivierten Ladevorgang I wird die Kommunikationsvorrichtung 20 derart von dem Sicherheitssystem des Fahrzeugs 1 betrieben, dass insbesondere ausschließlich eine zweite Kommunikationseinheit 22 angesteuert wird. Die zweite Kommunikationseinheit 22 sendet dabei ein Funksignal F mit einer zweiten Funkfrequenz F.1b, z. B. über eine LF-Funkverbindung aus. Wenn dagegen die primäre Ladeeinheit 8 betrieben wird und somit induktiv Energie an die sekundäre Ladeeinheit 6.1 überträgt, kann eine Frequenzüberlagerung einer Ladefrequenz L.1 mit der LF-Frequenz erfolgen. Daher wird bei dem aktivierten Ladevorgang II die Kommunikationsvorrichtung 20 derart durch das Sicherheitssystem betrieben, dass eine erste Kommunikationseinheit 21 angesteuert und das Funksignal F mit einer ersten Funkfrequenz F. 1b übertragen wird, die sich von der Ladefrequenz L.1 derart unterscheidet, dass eine Störung der Kommunikation mit dem mobilen ID-Geber 100 vermeidbar ist.

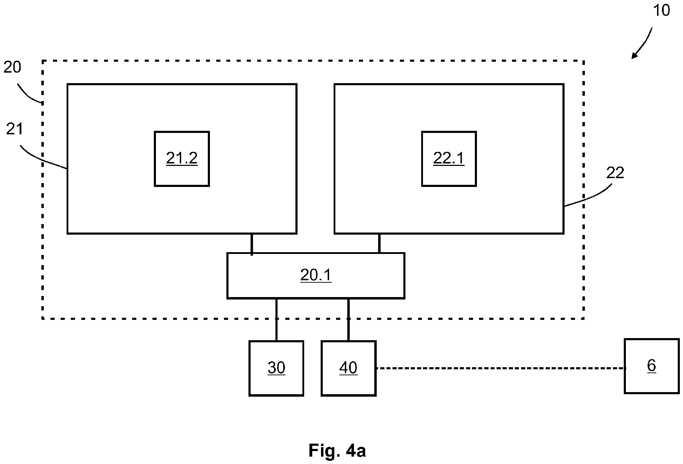

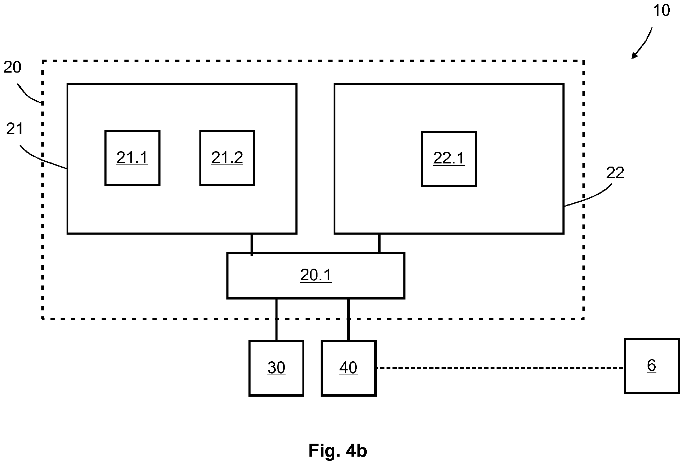

Die Figur 4a zeigt eine weitere Vorrichtung 10, wobei ein schematischer Aufbau einer Kommunikationsvorrichtung 20 dargestellt ist. Die Kommunikationsvorrichtung 20 umfasst dabei eine erste Kommunikationseinheit 21 und eine zweite Kommunikationseinheit 22. Dabei kann die erste Kommunikationseinheit 21 eine HF-Kommunikationsschnittstelle 21.2 umfassen, welche geeignet ist, ein Funksignal F über eine HF-Funkverbindung an einen ID-Geber 100 zu übertragen. Das Funksignal F wird in diesem Fall mit einer ersten Funkfrequenz F.1 übertragen, welche z. B. im Bereich von 3 MHz bis 30 MHz liegt. Diese erste Funkfrequenz F.1 unterscheidet sich damit deutlich von einer Ladefrequenz L.1 einer Ladevorrichtung 6 eines Fahrzeugs 1. Damit die erste Kommunikationseinheit 21 z. B. ausschließlich bei einem aktivierten Ladevorgang II angesteuert wird und im Normalfall (d. h. bei einem deaktivierten Ladevorgang I) insbesondere ausschließlich eine zweite Kommunikationseinheit 22 angesteuert wird, welche insbesondere eine LF-Kommunikationsschnittstelle 22.1 zur Aussendung des Funksignals F mit einer LF-Funkfrequenz umfasst, ist eine Steuereinheit 20.1 vorgesehen. Die Steuereinheit 20.1 weist bspw. eine Elektronik wie eine Auswerteeinheit auf, welche geeignet ist, elektronische Signale zu empfangen und auszuwerten, sowie elektronische Steuersignale zur Ansteuerung der ersten Kommunikationseinheit 21 und/oder zweiten Kommunikationseinheit 22 auszugeben. Die Steuereinheit 20.1 ist dabei bspw. elektronisch mit der ersten Kommunikationseinheit 21, der zweiten Kommunikationseinheit 22, einer Sensorvorrichtung 30 des Fahrzeugs 1 und mit einer Überwachungsvorrichtung 40 des Fahrzeugs 1 verbunden. Die Sensorvorrichtung 30 kann dabei z. B. der Steuereinheit 20.1 mitteilen, wenn sich ein Objekt 4 dem Fahrzeug 1 nähert. Daraufhin kann die Steuereinheit 20.1 z. B. die Überwachungsvorrichtung 40 abfragen. Durch diese Abfrage wird von der Steuereinheit 20.1 ermittelt, ob aktuell ein Ladevorgang L aktiviert oder deaktiviert ist. Dafür kann die Überwachungsvorrichtung 40 z. B. elektronisch und/oder drahtlos mit einer Ladevorrichtung 6 des Fahrzeugs 1 verbunden sein. Ebenfalls kann es vorgesehen sein, dass die Überwachungsvorrichtung 40 zur Überwachung des Ladevorgangs L Sensoren aufweist, welche z. B. Störsignale im Ladefrequenzbereich L.2 erfassen können. Wenn bspw. sowohl die Sensorvorrichtung 30 ein Signal an die Steuereinheit 20.1 überträgt, dass ein Objekt 4 detektiert wurde, als auch die Überwachungsvorrichtung 40 ein Signal an die Steuereinheit 20.1 überträgt, dass ein Ladevorgang L aktiviert ist, so steuert die Steuereinheit 20.1 die erste Kommunikationseinheit 21 an, woraufhin das Funksignal F von der ersten Kommunikationseinheit 21 übertragen wird. Bei einem deaktivierten Ladevorgang I steuert die Steuereinheit 20.1 dagegen die zweite Kommunikationseinheit 22 an. Dabei kann es ebenfalls vorgesehen sein, dass die erste Kommunikationseinheit 21, wie in Figur 4b dargestellt ist, neben einer HF-Kommunikationsschnittstelle 21.2 auch eine UWB-Kommunikationsschnittstelle 21.1 und/oder Bluetooth- Kommunikationsschnittstelle 21.1 umfasst. Hierdurch kann die Zuverlässigkeit der Kommunikation noch weiter erhöht werden. Es ist bspw. denkbar, dass gleichzeitig die UWB- und/oder Bluetooth-Kommunikationsschnittstelle 21.1 und die HF-Kommunikationsschnittstelle 21.2 das Funksignal F aussendet, um so z. B. unterschiedliche mobile ID-Geber 100 zu unterstützen. Auch kann es vorgesehen sein, dass die UWB- und/oder Bluetooth-Kommunikationsschnittstelle 21.1 und die HF-Kommunikationsschnittstelle 21.2 sequenziell und/oder in einem Polling-Betrieb betrieben werden. Es kann ferner möglich sein, dass durch die Überwachungsvorrichtung 40 unterschiedliche Frequenzbereiche (z. B. ein LF-Frequenzbereich und/oder ein Ladefrequenzbereich L.2) auf Störsignale überwacht werden und in Abhängigkeit der erfassten Störsignale entweder die erste Kommunikationseinheit 21, die zweite Kommunikationseinheit 22, die UWB- und/oder Bluetooth-Kommunikationsschnittstelle 21.1 und/oder die HF-Kommunikationsschnittstelle 21.2 und/oder die LF-Kommunikationsschnittstelle 22.1 betrieben werden. Selbstverständlich kann die erste Kommunikationseinheit 21 und/oder die zweite Kommunikationseinheit 22 auch noch weitere Kommunikationsschnittstellen für weitere Frequenzbereiche und Übertragungstechnologien (wie NFC, WLAN und dergleichen) aufweisen, welche geeignet sind, das Funksignal F über entsprechende Frequenzen zu übertragen.

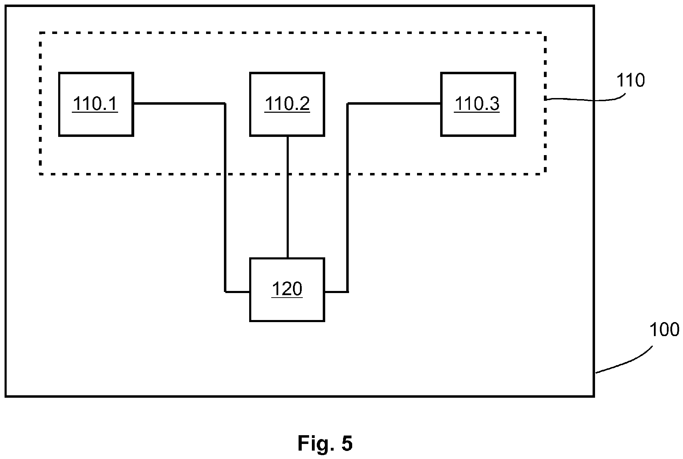

In Figur 5 ist ein Ausführungsbeispiel eines mobilen Identifikationsgebers 100 (kurz ID-Geber 100 genannt) gezeigt, wobei der Aufbau des mobilen ID-Gebers 100 schematisch dargestellt ist. Dabei kann der mobile ID-Geber 100 zumindest eine Sende- und/oder Empfangsvorrichtung 110 aufweisen, welche zumindest eine erste Sende- und/oder Empfangseinheit 110.1 und/oder eine zweite Sende- und/oder Empfangseinheit 110.2 und/oder eine dritte Sende- und/oder Empfangseinheit 110.3 aufweist. Die erste und/oder dritte Sende- und/oder Empfangseinheit 110.1 kann dabei z. B. zur Kommunikation mit einer ersten Kommunikationseinheit 21 einer Kommunikationsvorrichtung 20 einer Vorrichtung 10 geeignet sein. Die zweite Sende- und/oder Empfangseinheit 110.2 kann entsprechend zur Kommunikation mit einer zweiten Kommunikationseinheit 22 der Kommunikationsvorrichtung 20 der Vorrichtung 10 geeignet sein. Die dritte Sende- und/oder Empfangseinheit 110.3 kann z. B. auch zur Kommunikation mit einer HF-Kommunikationsschnittstelle 21.2 geeignet sein. Damit eine Auswertung eines empfangenen Funksignals F möglich ist, ist zudem eine Auswertevorrichtung 120 vorgesehen, welche z. B. elektronisch mit der ersten Sende- und/oder Empfangseinheit 110.1 und/oder der zweiten Sende- und/oder Empfangseinheit 110.2 und/oder der dritten Sende- und/oder Empfangseinheit 110.3 verbunden ist.

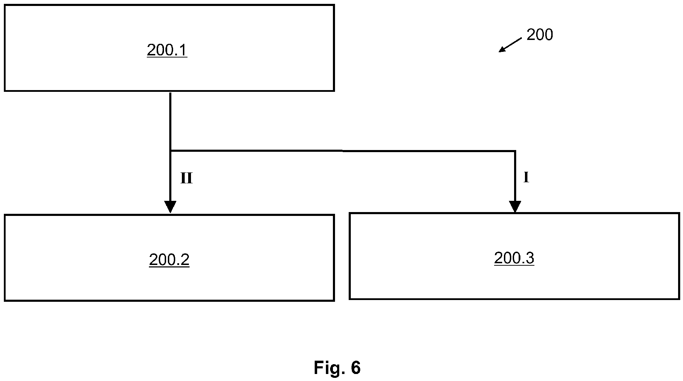

In Figur 6 sind schematisch Verfahrensschritte eines Verfahrens 200 gezeigt. Dabei wird in einem ersten Verfahrensschritt 200.1 z. B. durch eine Überwachungsvorrichtung 40 ausgewertet, ob ein Ladevorgang L aktiviert oder deaktiviert ist. Bei einem aktivierten Ladevorgang II wird dabei ein zweiter Verfahrensschritt 200.2 ausgeführt und bei einem deaktivierten Ladevorgang I wird ein dritter Verfahrensschritt 200.3 ausgeführt. Dabei wird in dem zweiten Verfahrensschritt 200.2 eine erste Kommunikationseinheit 21 zur Aussendung eines Funksignals F und im dritten Verfahrensschritt 200.3 eine zweite Kommunikationseinheit 22 zur Aussendung eines Funksignals F betrieben.

Die voranstehende Erläuterung beschreibt die vorliegende Erfindung ausschließlich im Rahmen von Beispielen.

### Bezugszeichenliste

- 1: Fahrzeug
- 2: Türgriff
- 4: Objekt
- 5: Erkennungsbereich
- 6: Ladevorrichtung
- 6.1: Sekundäre Ladeeinheit
- 7: Boden
- 8: Primäre Ladeeinheit
- 10: Vorrichtung

- 20: Kommunikationsvorrichtung
- 20.1: Steuereinheit
- 21: Erste Kommunikationseinheit
- 21.1: Bluetooth-Kommunikationsschnittstelle
- 21.2: HF-Kommunikationsschnittstelle
- 22: Zweite Kommunikationseinheit
- 22.1: LF-Kommunikationsschnittstelle

- 30: Sensorvorrichtung
- 40: Überwachungsvorrichtung

- 100: Mobiler Identifikationsgeber
- 110: Sende- und/oder Empfangsvorrichtung
- 110.1: Erste Sende- und/oder Empfangseinheit
- 110.2: Zweite Sende- und/oder Empfangseinheit
- 110.3: Dritte Sende- und/oder Empfangseinheit
- 120: Auswertevorrichtung
- 200: Verfahren
- 200.1: Erster Verfahrensschritt
- 200.2: Zweiter Verfahrensschritt
- 200.3: Dritter Verfahrensschritt

- L: Ladevorgang
- L.1: Ladefrequenz
- L.2: Ladefrequenzbereich

- F: Funksignal
- F.1: Funkfrequenz
- F.1a: Erste Funkfrequenz
- F.1b: Zweite Funkfrequenz

- I: Ladevorgang deaktiviert
- II: Ladevorgang aktiviert

## Patentansprüche

1. Verfahren (200) zum Betreiben einer Vorrichtung (10) für ein Sicherheitssystem eines Fahrzeuges (1), insbesondere für eine schlüssellose Aktivierung einer Schließvorrichtung des Fahrzeuges (1), wobei die Vorrichtung (10) eine Kommunikationsvorrichtung (20) zur Kommunikation mit einem mobilen Identifikationsgeber (100) durch ein Funksignal (F) mit einer ersten Funkfrequenz (F.1a) aufweist, wobei
ein induktiver Ladevorgang (L) im Bereich des Fahrzeuges (1) mit einer Ladefrequenz (L.1), insbesondere zum elektrischen Aufladen eines Energiespeichers, durchgeführt wird,
wobei die erste Funkfrequenz (F.1a) sich von der Ladefrequenz (L.1) derart unterscheidet, dass eine Störung der Kommunikation mit dem mobilen Identifikationsgeber (100) vermieden wird, wobei
durch die Kommunikationsvorrichtung (20) in Abhängigkeit des Ladevorganges (L) eine erste Kommunikationseinheit (21) oder eine zweite Kommunikationseinheit (22) zur Aussendung des Funksignals (F) angesteuert wird, wobei
bei einem aktivierten Ladevorgang (L) die erste Kommunikationseinheit (21) angesteuert wird und das Funksignal (F) mit der ersten Funkfrequenz (F.1a) übertragen wird, und bei einem deaktivierten Ladevorgang (L) die zweite Kommunikationseinheit (22) zur Aussendung des Funksignals (F) mit einer zweiten Funkfrequenz (F.1b) angesteuert wird, wobei
eine Überwachungsvorrichtung (40) zur Überwachung des Ladevorganges (L) vorgesehen ist, wobei durch die Überwachungsvorrichtung (40) der aktivierte und/oder deaktivierte Ladevorgang (L) erkannt wird, wobei
die Kommunikationsvorrichtung (20) die erste Kommunikationseinheit (21) zur Aussendung des Funksignals (F) mit der ersten Funkfrequenz (F.1a) deutlich außerhalb eines Ladefrequenzbereiches (L.2) und die zweite Kommunikationseinheit (22) zur Aussendung des Funksignals (F) mit der zweiten Funkfrequenz (F.1b) innerhalb des Ladefrequenzbereiches (L.2) aufweist, und wobei
eine Steuereinheit (20.1) vorgesehen ist, um die erste Kommunikationseinheit (21) bei dem aktivierten Ladevorgang (L) anzusteuern und im Normalfall bei dem deaktivierten Ladevorgang (L) die zweite Kommunikationseinheit (22) anzusteuern, wobei
eine Ladevorrichtung (6) zur Durchführung des induktiven Ladevorganges (L) des Fahrzeuges (1) mit der Ladefrequenz (L.1) vorgesehen ist.

2. Verfahren (200) nach Anspruch 1,
**dadurch gekennzeichnet,**
**dass** das Funksignal (F) ein Wecksignal zum Empfang durch den mobilen Identifikationsgeber (100) ist, wobei der mobile Identifikationsgeber (100) bei einem Empfang des Wecksignals ein Antwortsignal an die Vorrichtung (10) aussendet.

3. Verfahren (200) nach Anspruch 1 oder 2,
**dadurch gekennzeichnet,**
**dass** während des aktivierten Ladevorgangs (L) eine Ladevorrichtung (6) des Fahrzeuges (1) betrieben wird, wobei insbesondere durch den Stromfluss in einer primären Ladeeinheit (8) eine Spannung in einer sekundären Ladeeinheit (6.1) der Ladevorrichtung (6) erzeugt wird, insbesondere zur Aufladung eines Akkumulators des Fahrzeuges (1).

4. Verfahren (200) nach einem der Ansprüche 1 bis 3,
**dadurch gekennzeichnet,**
**dass** die nachfolgenden Schritte zur kontaktlosen Authentifizierung bei dem Sicherheitssystem des Fahrzeuges (1) durchgeführt werden:
a) Aussendung des Funksignals (F) durch die Kommunikationsvorrichtung (20),
b) Empfang des Funksignals (F) von dem mobilen Identifikationsgeber (100),
c) Aussendung eines Antwortsignals, insbesondere mit einem Sicherheitscode, an die Kommunikationsvorrichtung (20).

5. Fahrzeug (1), insbesondere Elektrofahrzeug (1), mit einer Vorrichtung (10) für ein Sicherheitssystem des Fahrzeuges (1), insbesondere für eine schlüssellose Aktivierung einer Schließvorrichtung des Fahrzeuges (1), wobei
die Vorrichtung (10) eine Kommunikationsvorrichtung (20) zur Kommunikation mit einem mobilen Identifikationsgeber (100) durch ein Funksignal (F) mit einer ersten Funkfrequenz (F.1a) aufweist, wobei
ein induktiver Ladevorgang (L) im Bereich des Fahrzeuges (1) mit einer Ladefrequenz (L.1), insbesondere zum elektrischen Aufladen eines Energiespeichers, durchführbar ist, wobei die erste Funkfrequenz (F.1a) sich von der Ladefrequenz (L.1) derart unterscheidet, dass eine Störung der Kommunikation mit dem mobilen Identifikationsgeber (100) vermeidbar ist, wobei
durch die Kommunikationsvorrichtung (20) in Abhängigkeit des Ladevorganges (L) eine erste Kommunikationseinheit (21) oder eine zweite Kommunikationseinheit (22) zur Aussendung des Funksignals (F) ansteuerbar ist, wobei
bei einem aktivierten Ladevorgang (L) die erste Kommunikationseinheit (21) ansteuerbar ist und das Funksignal (F) mit der ersten Funkfrequenz (F.1a) übertragbar ist, und bei einem deaktivierten Ladevorgang (L) die zweite Kommunikationseinheit (22) zur Aussendung des Funksignals (F) mit einer zweiten Funkfrequenz (F.1b) ansteuerbar ist, wobei
eine Überwachungsvorrichtung (40) zur Überwachung des Ladevorganges (L) vorgesehen ist, wobei durch die Überwachungsvorrichtung (40) der aktivierte und/oder deaktivierte Ladevorgang (L) erkennbar ist, wobei
die Kommunikationsvorrichtung (20) die erste Kommunikationseinheit (21) zur Aussendung des Funksignals (F) mit der ersten Funkfrequenz (F.1a) deutlich außerhalb eines Ladefrequenzbereiches (L.2) und die zweite Kommunikationseinheit (22) zur Aussendung des Funksignals (F) mit der zweiten Funkfrequenz (F.1b) innerhalb des Ladefrequenzbereiches (L.2) aufweist, und wobei
eine Steuereinheit (20.1) vorgesehen ist, um die erste Kommunikationseinheit (21) bei dem aktivierten Ladevorgang (L) anzusteuern und im Normalfall bei dem deaktivierten Ladevorgang (L) die zweite Kommunikationseinheit (22) anzusteuern, wobei
eine Ladevorrichtung (6) zur Durchführung des induktiven Ladevorganges (L) des Fahrzeuges (1) mit der Ladefrequenz (L.1) vorgesehen ist.

6. Fahrzeug (1) nach Anspruch 5,
**dadurch gekennzeichnet,**
**dass** die Ladevorrichtung (6) insbesondere eine sekundäre Ladeeinheit (6.1) aufweist, und insbesondere während des Ladevorganges (L) induktiv Energie von einer primären Ladeeinheit (8) übertragbar ist
und/oder dass das Fahrzeug (1) gemäß einem Verfahren (200) nach einem der Ansprüche 1 bis 4 betreibbar ist.

## Claims

1. A method (200) for operating an apparatus (10) for a security system of a vehicle (1), in particular for keyless activation of a locking mechanism of the vehicle (1), wherein
the apparatus (10) has a communication device (20) for communication with a mobile identification transmitter (100) using a radio signal (F) at a first radio frequency (F.1), wherein
an inductive charging process (L) can be carried out in the region of the vehicle (1) at a charging frequency (L.1), in particular for electrically charging an energy storage device, wherein
the first radio frequency (F.1) differs from the charging frequency (L.1) such that any interference in the communication with the mobile identification transmitter (100) is prevented, wherein
a first communication unit (21) or a second communication unit (22) is controlled by the communication device (20) for transmitting the radio signal (F) in accordance with the charging process (L), wherein
in an activated charging process (L), the first communication unit (21) is controlled and the radio signal (F) is transmitted with the first radio frequency (F.1), and in a deactivated charging process (L) the second communication unit (22) is controlled for the transmission of the radio signal (F) with a second radio frequency (F.1b), wherein
a monitoring device (40) is provided for monitoring the charging process (L), wherein the activated and/or deactivated charging process (L) is detected through the monitoring device (40), wherein
the communication device (20) has the first communication unit (21) for the transmission of the radio signal (F) with the first radio frequency (F.1a) being significantly outside of the charging frequency range (L.2) and the second communication unit (22) for transmission of the radio signal (F) with a second radio frequency (F.1b) within the charging frequency range (L.2), and wherein
a control unit (20.1) is provided to control the first communication unit (21) in the activated charging process (L) and to control the second communication unit (22) in deactivated charging process (L) in a normal state, wherein
a charging device (6) is provided for performing the inductive charging process (L) of the vehicle (1) with the charging frequency (L.1).

2. The method (200) according to claim 1,
**characterized in that**
the radio signal (F) is a wake-up signal to be received by the mobile identification transmitter (100), wherein on receiving the wake-up signal the mobile identification transmitter (100) transmits a response signal to the apparatus (10).

3. The method (200) according to claim 1 or 2,
**characterized in that**
a charging device (6) of the vehicle (1) is operated during the active charging process (L), wherein in particular, due to the current flow in a primary charging unit (8), a voltage is generated in a secondary charging unit (6.1) of the charging device (6), in particular to charge a rechargeable battery of the vehicle (1).

4. The method (200) to any one claims 1 to 3,
**characterized in that**
the following steps are carried out for a contactless authentication with the security system of the vehicle (1):
a) transmission of the radio signal (F) by the communication device (20),
b) reception of the radio signal (F) by the mobile identification transmitter (100),
c) transmission of a response signal, in particular with a security code, to the communication device (20).

5. A vehicle (1), in particular an electric vehicle (1), having an apparatus (10) for a security system of the vehicle (1), in particular for a keyless activation of a locking mechanism of the vehicle (1), wherein
the apparatus (10) has a communication device (20) for communication with a mobile identification transmitter (100) using a radio signal (F) with a first radio frequency (F.1), wherein
an inductive charging process (L) can be carried out in the region of the vehicle (1) at a charging frequency (L.1), in particular for electrically charging an energy storage device, wherein
the first radio frequency (F.1) differs from the charging frequency (L.1) such that any interference in the communication with the mobile identification transmitter (100) can be prevented,
the communication device (20) can control a first communication unit (21) or a second communication unit (22) for transmitting the radio signal (F), in accordance with the charging process (L), wherein
in an activated charging process (L), the first communication unit (21) is controllable and the radio signal (F) is transmittable with the first radio frequency (F.1), and in a deactivated charging process (L) the second communication unit (22) is controllable for the transmission of the radio signal (F) with a second radio frequency (F.1b), wherein
a monitoring device (40) is provided for monitoring the charging process (L), wherein the activated and/or deactivated charging process (L) is detectable through the monitoring device (40), wherein
the communication device (20) has the first communication unit (21) for the transmission of the radio signal (F) with the first radio frequency (F.1a) being significantly outside of the charging frequency range (L.2) and the second communication unit (22) for transmission of the radio signal (F) with a second radio frequency (F.1b) within the charging frequency range (L.2), and wherein
a control unit (20.1) is provided to control the first communication unit (21) in the activated charging process (L) and to control the second communication unit (22) in deactivated charging process (L) in a normal state, wherein
a charging device (6) is provided for performing the inductive charging process (L) of the vehicle (1) with the charging frequency (L.1).

6. The vehicle (1) according to claim 5,
**characterized in that**
the charging device (6) in particular has a secondary charging unit (6.1), and energy can be transferred by induction from a primary charging unit (8) in particular during the charging process (L) and/or
that the vehicle (1) is operable according to one of the claims 1 to 4.

## Revendications

1. Procédé (200) pour faire fonctionner un appareil (10) pour un système de sécurité d'un véhicule (1), en particulier pour l'activation sans clé d'un mécanisme de verrouillage du véhicule (1), où
l'appareil (10) comporte un dispositif de communication (20) pour communiquer avec un émetteur d'identification mobile (100) en utilisant un signal radio (F) à une première fréquence radio (F.1), où
un processus de charge inductif (L) peut être effectué dans la zone du véhicule (1) à une fréquence de charge (L.1), en particulier pour charger électriquement un dispositif de stockage d'énergie, où
la première fréquence radio (F.1) diffère de la fréquence de charge (L.1) de telle sorte que toute interférence dans la communication avec l'émetteur d'identification mobile (100) est empêchée, où
une première unité de communication (21) ou une seconde unité de communication (22) est commandée par le dispositif de communication (20) pour transmettre le signal radio (F) en fonction du processus de charge (L), où
dans un processus de charge activé (L), la première unité de communication (21) est commandée et le signal radio (F) est transmis avec la première fréquence radio (F.1), et dans un processus de charge désactivé (L), la deuxième unité de communication (22) est commandée pour la transmission du signal radio (F) avec une deuxième fréquence radio (F.1b), où
un dispositif de surveillance (40) est prévu pour surveiller le processus de charge (L), dans lequel le processus de charge activé et/ou désactivé (L) est détecté par le dispositif de surveillance (40), où
le dispositif de communication (20) présente la première unité de communication (21) pour la transmission du signal radio (F) avec la première fréquence radio (F.1a) se situant sensiblement en dehors de la plage de fréquence de charge (L.2) et la seconde unité de communication (22) pour la transmission du signal radio (F) avec une seconde fréquence radio (F.1b) dans la plage de fréquence de charge (L.2), et où
une unité de commande (20.1) est prévue pour commander la première unité de communication (21) dans le processus de charge activé (L) et pour commander la deuxième unité de communication (22) dans le processus de charge désactivé (L) dans un état normal, où
un dispositif de charge (6) est prévu pour effectuer le processus de charge inductive (L) du véhicule (1) avec la fréquence de charge (L.1).

2. La méthode (200) selon la revendication 1,
**caractérisé en ce que**
le signal radio (F) est un signal de réveil à recevoir par l'émetteur d'identification mobile (100), dans lequel, lors de la réception du signal de réveil, l'émetteur d'identification mobile (100) transmet un signal de réponse au dispositif (10).

3. La méthode (200) selon la revendication 1 ou 2,
**caractérisé en ce que**
un dispositif de charge (6) du véhicule (1) est actionné pendant le processus de charge actif (L), dans lequel en particulier, en raison du courant circulant dans une unité de charge primaire (8), une tension est générée dans une unité de charge secondaire (6.1) du dispositif de charge (6), en particulier pour charger une batterie rechargeable du véhicule (1).

4. La méthode (200) à l'une quelconque des revendications 1 à 3,
**caractérisé en ce que**
les étapes suivantes sont effectuées pour une authentification sans contact avec le système de sécurité du véhicule (1) :
a) transmission du signal radio (F) par le dispositif de communication (20),
b) réception du signal radio (F) par l'émetteur d'identification mobile (100),
c) transmission d'un signal de réponse, en particulier d'un code de sécurité, au dispositif de communication (20).

5. Véhicule (1), en particulier véhicule électrique (1), comportant un dispositif (10) pour un système de sécurité du véhicule (1), en particulier pour une activation sans clé d'un mécanisme de verrouillage du véhicule (1), où
l'appareil (10) comporte un dispositif de communication (20) pour communiquer avec un émetteur d'identification mobile (100) en utilisant un signal radio (F) avec une première fréquence radio (F.1), où
un processus de charge inductif (L) peut être effectué dans la zone du véhicule (1) à une fréquence de charge (L.1), en particulier pour charger électriquement un dispositif de stockage d'énergie, où
la première fréquence radio (F.1) diffère de la fréquence de charge (L.1) de sorte que toute interférence dans la communication avec l'émetteur d'identification mobile (100) puisse être évitée,
le dispositif de communication (20) peut commander une première unité de communication (21) ou une seconde unité de communication (22) pour transmettre le signal radio (F), en fonction du processus de charge (L), où
dans un processus de charge activé (L), la première unité de communication (21) peut être commandée et le signal radio (F) peut être transmis avec la première fréquence radio (F.1), et dans un processus de charge désactivé (L), la deuxième unité de communication (22) peut être commandée pour la transmission du signal radio (F) avec une deuxième fréquence radio (F.1b), où
un dispositif de surveillance (40) est prévu pour surveiller le processus de charge (L), dans lequel le processus de charge activé et/ou désactivé (L) peut être détecté par le dispositif de surveillance (40), où
le dispositif de communication (20) présente la première unité de communication (21) pour la transmission du signal radio (F) avec la première fréquence radio (F.1a) se situant sensiblement en dehors de la plage de fréquence de charge (L.2) et la seconde unité de communication (22) pour la transmission du signal radio (F) avec une seconde fréquence radio (F.1b) dans la plage de fréquence de charge (L.2), et où
une unité de commande (20.1) est prévue pour commander la première unité de communication (21) dans le processus de charge activé (L) et pour commander la deuxième unité de communication (22) dans le processus de charge désactivé (L) dans un état normal, où
un dispositif de charge (6) est prévu pour effectuer le processus de charge inductive (L) du véhicule (1) avec la fréquence de charge (L.1).

6. Le véhicule (1) selon la revendication 5,
**caractérisé en ce que**
le dispositif de charge (6) en particulier présente une unité de charge secondaire (6.1), et l'énergie peut être transférée par induction depuis une unité de charge primaire (8) en particulier pendant le processus de charge (L) et/ou
**que** le véhicule (1) peut fonctionner selon l'une des revendications 1 à 4.
